# EUROPÄISCHE PATENTANMELDUNG

(11) **EP 2 151 671 A2**
(43) Veröffentlichungstag der Anmeldung: **10.02.2010**
(21) Anmeldenummer: 09177162.6
(22) Anmeldetag: 16.06.2005
(51) Int. Cl.: G01F 1/26

(54) **Strömungssensor**

(30) Priorität: 16.06.2004 DE 102004028759; 28.08.2004 DE 202004013488 U; 09.02.2005 DE 102005005996
(62) Teilanmeldung aus: 05754711.9
(71) Anmelder: Buck, Robert, 88142 Wasserburg (DE)
(72) Erfinder: Buck, Robert, 88142 Wasserburg (DE); Schocker, Berthold, 88069 Tettnang (DE); Buhl, Peter, 88069 Tettnang (DE)
(74) Vertreter: Meissner, Bolte & Partner

(57) **Zusammenfassung**

Die Erfindung betrifft einen Sensor für strömende Medien mit einem Gehäuse, einem Sensorelement und einem Hubkörper, wobei das zum Hubkörper weisende Ende des Gehäuses als Führungsbolzen und ein Ende des Hubkörpers ring- oder hülsenförmig ausgebildet ist, der Hubkörper durch den Bolzen geführt wird, weiterhin der hülsenförmige Teil des Hubkörpers als Betätigungselement für einen induktiven Näherungsschalter als Sensorelement dient, der induktive Näherungsschalter im zum Hubkörper weisenden Ende des Gehäuses befestigt ist und der Hubkörper den induktiven Näherungsschalter bedämpft.

## Beschreibung

Die Erfindung betrifft einen Sensor für strömende Medien, mit einem Gehäuse, mit einem in dem Gehäuse angeordneten Sensorelement und einem Hubkörper gemäß Oberbegriff Patentanspruchs 1.

Eingangs ist gesagt worden, dass die Erfindung einen Strömungssensor betrifft. Ein derartiger Strömungssensor kann auch als Strömungswächter oder als Strömungsmessgerät bezeichnet werden. Daneben wird für derartige Strömungssensoren teilweise auch der Begriff Durchflusssensor bzw. Durchflusswächter verwendet. Im Rahmen der Erfindung wird unter einem Strömungssensor sowohl ein Strömungswächter bzw. Durchflusswächter verstanden, mit dem lediglich das Vorhandensein oder Nicht-Vorhandensein einer bestimmten Strömung festgestellt wird, als auch ein Strömungsmessgerät bzw. Durchflussmessgerät, bei dem ein Strömungswert gemessen wird; bei dem also ein dem Strömungswert entsprechender Messwert gewonnen werden kann.

Bekannte Strömungswächter bzw. Strömungsmessgeräte arbeiten häufig nach dem kalorimetrischen Prinzip. Dazu weisen die Strömungssensoren in der Regel mindestens ein Temperaturmesselement und ein Heizelement auf. Im Allgemeinen arbeitet man mit einer Differenztemperaturmessung. Ein erstes Temperaturmesselement misst die eigentliche Messtemperatur, wobei sich die Messtemperatur aus der Heizleistung des Heizelements, der Temperatur des strömenden Mediums und der strömungsabhängigen Wärmetransportkapazität des strömenden Mediums ergibt. Weiter misst im Allgemeinen ein zweites Temperaturmesselement eine Referenztemperatur, wobei jedoch die Funktion des zweiten Temperaturmesselements auch von dem Heizelement übernommen werden kann. Bei einem Strömungssensor nach dem kalorimetrischen Prinzip stellen das Temperaturmesselement und das Heizelement das bzw. die eingangs genannten Sensorelemente dar. Derartige Strömungssensoren sind - insbesondere im Vergleich zu herkömmlichen Näherungsschaltern - relativ teuer.

Sensoren, die zur Überwachung eines Mediums bzw. der Eigenschaft eines Mediums, wie z. B. des Druckes einer Flüssigkeit oder eines Gases, dienen, insbesondere Strömungssensoren, weisen meist ein zylindrisches Gehäuse auf, wobei das Gehäuse zum einen, wie bei allen Sensoren, zum Schutz des Sensors und der dazu gehörenden Elektronik, zum anderen aber auch zum sicheren und dauerhaften Anschluss an das das Medium führende Rohr bzw. den Behälter dient.

Die Sensoren sind entweder zum Anschluss an separate Auswerteelektroniken vorgesehen, oder mit der Auswerteelektronik als kompakte Einheit zusammengefasst. Insbesondere derartige Kompaktgeräte, bestehen meist aus mindestens zwei Teilen, einem Unterteil und einem Oberteil, wobei das Unterteil mit dem das Medium führenden Behälter oder Rohr verbunden ist und deshalb häufig auch als Prozessanschluss bezeichnet wird. Dazu kann das Gehäuse entweder direkt in ein entsprechend ausgebildetes Rohrstück - T-Stück oder Prozessanschluss - eingeschraubt, oder zusammen mit einem speziellen Anschlussstück als komplette Baueinheit mit dem Leitungssystem einer Maschine oder eines Behälters, durch das das zu überwachende Medium fließt, verbunden werden.

Strömungssensoren können bei einer Vielzahl von Anwendungsfällen eingesetzt werden. Beispielsweise können Strömungssensoren in verfahrenstechnischen Anlagen und bei Werkzeugmaschinen eingesetzt werden. In beiden Fällen dienen Strömungssensoren dazu, die Strömung bzw. die Strömungsgeschwindigkeit eines bestimmten Mediums, beispielsweise Luft, Wasser, Öl oder Kühlschmiermittel, zu messen bzw. zu überwachen.

Nachteilig bei den zuvor beschriebenen Sensoren, insbesondere bei einem Strömungssensor, ist es - unabhängig davon, ob das Gehäuse ein- oder zweiteilig ausgeführt ist -, dass zum Anschluss des Sensors bzw. des Prozessanschlusses des Sensors in bestehenden Anlagen eine Rohrleitung aufgetrennt und ein T-Stück zur Aufnahme des Sensors eingebaut werden muss. Diese Vorgehensweise ist dann besonders nachteilig, wenn die Verwendung eines Strömungssensors nur mit relativ geringen Kosten verbunden sein soll. Dies ist beispielsweise bei der Wasserversorgung in einem Ein- oder Mehrfamilienhaus der Fall. Eine zentrale Wasserversorgungsanlage in einem Ein- oder Mehrfamilienhaus besteht in der Regel aus einem Warmwasserkreislauf, mit einem Warmwasserspeicher, einem Kaltwasserzulauf und einer Warm- und Kaltwasserleitung mit mehreren Zapfstellen (z. B. in den Bädern, der Küche und den Toiletten).

Der vorliegenden Erfindung liegt daher die Aufgabe zugrunde, einen eingangs beschriebenen Strömungssensor zur Verfügung zu stellen, welcher möglichst kostengünstig hergestellt werden kann. Darüber hinaus soll der Strömungssensor eine möglichst hohe Messgenauigkeit aufweisen.

Die Lösung der Aufgabe erfolgt durch die Merkmalskombination nach Anspruch 1, wobei die Unteransprüche zweckmäßige Ausgestaltungen und Weiterbildungen umfassen.

Es wird davon ausgegangen, dass ein in das strömende Medium hineinragender Hubkörper vorgesehen ist, wobei der Hubkörper an dem Gehäuse beweglich geführt und in Abhängigkeit von der Strömung des zu überwachenden Mediums gegen die Rückstellkraft eines zwischen dem Gehäuse und dem Hubkörper angeordneten Rückstellelements bewegbar ist, und dass das Sensorelement als berührungsloser Näherungsschalter ausgebildet ist und ein von der Position des Hubkörpers abhängiges Signal erzeugt.

Durch die Anordnung des in das strömende Medium hineinragenden, beweglich am Gehäuse geführten Hubkörpers, dessen Position ein Maß für die zu überwachende Strömung darstellt, kann ein sehr einfacher Strömungssensor realisiert werden. Das Sensorelement ist dabei durch einen in dem Gehäuse angeordneten berührungslosen Näherungsschalter realisiert sein, der ein von der Position des Hubkörpers abhängiges Signal abgibt.

Wie eingangs bereits ausgeführt worden ist, kann mit dem erfindungsgemäßen Strömungssensor sowohl lediglich das Vorhandensein oder Nicht-Vorhandensein einer bestimmten Strömung festgestellt als auch ein Strömungswert gemessen werden; d. h. ein dem Strömungswert entsprechender Messwert gewonnen werden. Somit handelt es sich bei dem berührungslosen Näherungsschalter nicht um einen binären Schalter im klassischen Sinn, sondern um einen berührungslosen "Näherungssensor", der zunächst ein von der Position des Hubkörpers abhängiges analoges Signal erzeugt, welches entsprechend der Ausgestaltung des Sensorelements in ein klassisches - binäres - Schaltsignal oder ein analoges bzw. digitales Ausgangssignal umgewandelt wird.

Je nachdem, ob der erfindungsgemäße Strömungssensor als Strömungsmessgerät einen dem Strömungswert entsprechenden analogen Messwert oder als Strömungswächter ein binäres Schaltsignal ausgeben soll, wird das von dem Näherungsschalter erzeugte Signal in einer nachfolgenden Bearbeitungseinheit in ein binäres, analoges oder digitales Ausgangssignal umgewandelt. Die Bearbeitungseinheit kann dabei im Falle eines Strömungsmessgeräts insbesondere einen Mikroprozessor und im Falle eines Strömungswächters insbesondere einen Schwellwertschalter aufweisen.

Soll der erfindungsgemäße Strömungssensor als Strömungswächter ein binäres Schaltsignal ausgeben, so wird vorzugsweise ein Näherungsschalter mit einer geringen Hysterese und/oder einer hohen Schaltgenauigkeit eingesetzt, so dass eine hohe Messgenauigkeit des Strömungssensors erreicht werden kann. Die geringe Hysterese sorgt dabei dafür, dass der Einschaltpunkt und der Ausschaltpunkt eines als Schalter ausgebildeten Strömungssensors sehr eng zusammen liegen, so dass nur ein geringer Unterschied in der Position des Hubkörpers und damit in der Strömung des zu überwachenden Mediums zwischen dem Einschaltpunkt und dem Ausschaltpunkt besteht.

Das Rückstellelement, das zwischen dem Gehäuse und dem Hubkörper angeordnet ist, kann als mechanisches, magnetisches oder elektromagnetisches Rückstellelement ausgebildet sein. Im einfachsten Fall wird dabei ein Federelement verwendet, gegen dessen Federkraft der Hubkörper durch die Strömung des Mediums ausgelenkt wird. Daneben kann für bestimmte Anwendungsfälle jedoch auch eine Magnet-Magnetanordnung oder eine Magnet-Spulenanordnung als Rückstellelement eingesetzt werden. Hierbei weist der Hubkörper mindestens einen Magneten auf, der mit mindestens einem im Gehäuse angeordneten Gegenmagneten oder mit einer im Gehäuse angeordneten Spule zusammenwirkt. Als Rückstellkraft wirkt dann die zwischen den Magneten oder zwischen dem Magneten und der Spule existierenden magnetischen Abstoßungskraft.

Gemäß einer besonders vorteilhaften Ausgestaltung des erfindungsgemäßen Strömungssensors weist der Hubkörper einen umlaufenden Bund auf, wobei der Bund so ausgebildet ist, dass der Strömungssensor zusätzlich die Funktion eines Rückschlagventils aufweist. Dadurch kann der erfindungsgemäße Strömungssensor einfach anstelle eines in einer Wasserversorgungsanlage vorhandenen Rückschlagventils in den für das Rückschlagventil bereits vorgesehenen Anschlussstutzen eines Rohres, insbesondere des Kaltwasserzulaufs, eingeschraubt werden. Damit entfällt das bei der Verwendung von kalorimetrischen Strömungssensoren notwendige Einfügen eines T-Stückes in die bestehende Rohrleitung zum Anschluss des Strömungssensors. Da der Strömungssensor gleichzeitig auch als Rückschlagventil dient, sind keine Änderungen in den Rohrleitungen erforderlich; der Strömungssensor ersetzt einfach das Rückschlagventil und liefert darüber hinaus noch eine Aussage über die Strömung des Mediums, d. h. des Wassers, in der Leitung.

Um auch bei relativ kleinen Strömungen einen ausreichend großen Hub des Hubkörpers zu erreichen, der dann auch mit einem einfachen berührungslosen Näherungsschalter detektiert werden kann, ist vorzugsweise vorgesehen, dass zwischen dem - im eingebauten Zustand - in das Rohr ragenden Ende des Hubkörpers und dem umlaufenden Bund ein zylindrischer Abschnitt am Hubkörper ausgebildet ist. Dadurch wird erreicht, dass das in das Rohr ragende Ende des Hubkörpers - im Unterschied zu einem normalen Rückschlagventil - nicht als flacher Teller ausgebildet ist. Durch die Ausbildung eines zylindrischen Abschnittes, der im eingebauten Zustand des Strömungssensors in den Ventilsitz im Rohr hineinragt, wird bereits bei sehr geringen Strömungen ein ausreichend großer Hub des Hubkörpers erreicht.

Alternativ zu einem zylindrischen Abschnitt kann auch ein Abschnitt mit einer geringen Konizität von 0,5° bis 15°, vorzugsweise von 1° bis 10° am Hubkörper ausgebildet sein. In diesem Fall kann dann der umlaufende Bund entfallen. Der Vorteil eines Abschnitts mit einer geringen Konizität besteht darin, dass Toleranzen im Durchmesser der Leitungsabschnitts, in den der Hubkörper hineinragt, beispielsweise des Ventilsitzes, durch den konischen Bereich ausgeglichen werden können. Dadurch ist gewährleistet, dass für einen Solldurchmesser des Leitungsabschnitts auch stets ein Strömungssensor mit einem entsprechenden Hubkörperdurchmesser eingesetzt werden kann.

Erfindungsgemäß wird als Sensorelement ein induktiver Näherungsschalter verwendet, insbesondere ein nichtbündig einbaubarer induktiver Näherungsschalter. Derartige induktive Näherungsschalter werden seit Jahrzehnten millionenfach im industriellen Bereich eingesetzt, so dass je nach konkretem Anwendungsfall eine Vielzahl unterschiedlicher induktiver Näherungsschalter, mit unterschiedlichen Durchmessern und unterschiedlichen Schaltabständen zur Verfügung stehen. Ein nichtbündig einbaubarer induktiver Näherungsschalter weist im Unterschied zu einem bündigen bzw. bündig einbaubaren Näherungsschalter auch ein seitliches Streufeld auf, da der vordere sensitive Bereich des Näherungsschalters kein Metallgehäuse aufweist, so dass nicht nur frontal sondern auch seitlich an den Näherungsschalter angenäherte Objekte erkannt werden können. Bei einem nichtbündig einbaubaren induktiven Näherungsschalter reicht ein Metallgehäuse - sofern der Näherungsschalter ein Metallgehäuse aufweist - nur bis zum Sensorkopf, d. h. bis zur Spule bzw. bis zum Schalenkern des Näherungsschalters.

Damit auch ein induktiver Näherungsschalter bei einem möglichst geringen Durchmesser einen großen Schaltabstand aufweist, ist vorzugsweise vorgesehen, dass der Sensorkopf des induktiven Näherungsschalters neben einer Spule einen Schalenkern, insbesondere aus Ferrit aufweist, in dem die Spule eingelegt ist. Derartige Schalenkerne sind bei induktiven Näherungsschalter seit langem bekannt und dienen dazu, die räumliche Verteilung der Feldlinien des elektromagnetische Feld des Sensorkopfes in gewünschter Weise zu beeinflussen.

Alternativ dazu kann der Sensorkopf des induktiven Näherungsschalters eine Spule aufweisen, wobei in der Spule vorzugsweise ein stabförmiger Kern angeordnet ist. Durch den stabförmigen Kern wird die räumliche Ausbreitung des elektromagnetischen Feldes vergrößert. Dadurch wird der sensitive Bereich des induktiven Näherungsschalters vergrößert. Dies ist insbesondere dann vorteilhaft, wenn der Strömungssensor als Analogsensor ausgebildet sein soll, d. h. ein analoges Ausgangssignal ausgibt, da dann der analoge Bereich eine ähnliche Länge wie der stabförmige Kern hat. Das analoge Signal hängt dabei vom Bedämpfungsgrad des induktiven Näherungsschalters ab.

Erfindungsgemäß ist das zum Hubkörper weisende Ende des Gehäuses als Führungsbolzen und das Ende des Hubkörpers hülsenförmig ausgebildet, so dass der Hubkörper auf dem Führungsbolzen geführt ist. Der hülsenförmige Teil des Hubkörpers besteht dabei vorzugsweise aus Metall, insbesondere aus Edelstahl, so dass er als Betätigungselement für einen induktiver Näherungsschalter dient. Bei einer entsprechenden Annäherung des Endes des Hubkörpers an die Stirnseite des induktiven Näherungsschalters entsteht in der Stirnseite des hülsenförmigen Teils des Hubkörpers ein Kreisstrom, der eine stark bedämpfende Wirkung auf das elektromagnetische Feld des Näherungsschalters ausübt. Dieser Effekt ist als Kurzschlussringeffekt bekannt. Da ein nichtbündig einbaubarer induktiver Näherungsschalter auch ein seitliches Streufeld aufweist, bleibt der Näherungsschalter auch bei einer weiteren Annäherung des Hubkörpers weiter bedämpft, da der Näherungsschalter sich fortlaufend innerhalb des hülsenförmige Teil des Hubkörpers befindet. Die Bedämpfung des Näherungsschalters ist dabei proportional zur Eintauchtiefe des Näherungsschalters in den hülsenförmigen Teil des Hubkörpers, so dass auch ein zur Strömung proportionales analoges Ausgangssignal erzeugt werden kann.

Aufgrund der stark bedämpfenden Wirkung der Stirnseite des hülsenförmigen Teils des Hubkörpers kann der hülsenförmige Teil des Hubkörpers sehr dünn ausgebildet sein, so dass der Hubkörper insgesamt ein geringes Gewicht aufweist. Hierdurch ergibt sich nicht nur eine Platz- und Materialersparnis, sondern auch eine verbesserte Dynamik des Strömungssensors. Der hülsenförmige Teil des Hubkörpers kann beispielsweise eine Wandstärke von nur 1 mm oder weniger aufweisen. Das Verhältnis des Durchmessers des hülsenförmigen Teils des Hubkörpers zum Durchmesser der Spule des induktiven Näherungsschalters kann dabei einen Wert von 2 bis 4, vorzugsweise von 2,5 bis 3,5 haben.

Aufgrund des Kurzschlussringeffekts wäre anstelle eine hülsenförmigen Hubkörpers grundsätzlich auch nur ein ringförmiger Hubkörper zur Bedämpfung ausreichend. In der Praxis kann dies dadurch realisiert sein, dass der hülsenförmige Teil des Hubkörpers aus Kunststoff besteht, wobei in dem hülsenförmigen Teil mindestens ein Metallring angeordnet ist. Soll ein analoger Strömungssensor mit einem nichtbündigen induktiven Näherungsschalter realisiert werden, so können mehrere, einen Abstand zueinander aufweisende Metallringe im hülsenförmigen Teil des Hubkörpers angeordnet werden. Aufgrund des auch seitlichen Streufeldes des nichtbündigen induktiven Näherungsschalters ist dadurch messbar, wie viele Metallringe sich innerhalb des Streufeldes des Näherungsschalters befinden, so dass die Bedämpfung des Näherungsschalters proportional zur Eintauchtiefe in den hülsenförmigen Teil des Hubkörpers ist und auch auf dieser Art ein zur Strömung proportionales analoges Ausgangssignal erzeugt werden kann.

Gemäß einer weiteren Ausgestaltung der Erfindung ist der Hubkörper zweiteilig ausgebildet ist; der Hubkörper besteht dann aus einem - im eingebauten Zustand - in das Innere des Rohres ragenden ersten Teil und einem - im eingebauten Zustand - aus dem Inneren des Rohres weisenden zweiten Teil. Die Zweiteiligkeit des Hubkörpers schafft die Möglichkeit, für die beiden Teile des Hubkörpers verschiedene Materialien zu verwenden, so dass der Hubkörper noch besser an die jeweiligen Einsatzbedingungen angepasst werden kann.

Vorteilhafterweise ist das Sensorelement derart in dem Gehäuse angeordnet, dass der Abstand des Sensorelements zum Hubkörper einstellbar ist. Hierdurch ist ein einfaches Einstellen des Schaltpunktes des Näherungsschalters bei einem als Schalter ausgebildeten Strömungssensors bzw. des Nullpunktes bei einem analogen Strömungssensor möglich. Im einfachsten Fall ist dabei der ein Außengewinde aufweisende Näherungsschalter in dem Gehäuse eingeschraubt, so dass durch eine entsprechende Schraubbewegung der Abstand des Sensorelements zum Hubkörper vergrößert oder verkleinert werden kann. Bei einem analogen Strömungssensor kann dadurch auch der Messbereich eingestellt werden. Dadurch kann beispielsweise ein Teilbereich des maximal möglichen Messbereichs ausgewählt werden, der dann mit einer entsprechend höheren Messgenauigkeit gemessen werden kann.

Gemäß einer komfortableren Alternative der Einstellbarkeit ist an dem Hubkörper abgewandten Ende des Gehäuses ein Befestigungsbügel aufgeschraubt und zwischen dem Ende des Gehäuses und dem Befestigungsbügel eine Verstellmutter angeordnet ist, wobei das Sensorelement ein Außengewinde mit mindestens einer abgeflachten Längsseite aufweist, in dem Befestigungsbügel eine an den Querschnitt des Sensorelements angepasste Öffnung ausgebildet ist und die Verstellmutter ein zum Außengewinde des Sensorelements korrespondierendes Innengewinde aufweist. Durch Verdrehen der Verstellmutter kann dann die axiale Position des Sensorelements eingestellt werden kann, ohne dass sich das Sensorelement mitdreht. Dies ist insbesondere dann vorteilhaft, wenn das Sensorelement über sein Anschlusskabel bereits elektrisch angeschlossen ist, da dann ein Mitdrehen des Anschlusskabels verhindert wird.

Wie zuvor bereits ausgeführt, kann der erfindungsgemäße Strömungssensor besonders vorteilhaft in einer Wasserversorgungsanlage in einem Ein- oder Mehrfamilienhaus an der Position eines Rückschlagventils eingesetzt werden. Daher betrifft die Erfindung neben dem zuvor beschriebenen Strömungssensor auch eine Anordnung zur Strömungsüberwachung in einer Wasserversorgungsanlage in einem Ein- oder Mehrfamilienhaus, mit einem erfindungsgemäßen Strömungssensor, wobei die Wasserversorgungsanlage zumindest einen Kaltwasserzulauf, einen Brauchwasserspeicher und einen Warmwasserkreislauf mit einer Warmwasserleitung und mehreren Zapfstellen aufweist, und wobei im Kaltwasserzulauf ein Ventilsitz ausgebildet ist. Erfindungsgemäß ist nun der Strömungssensor im Kaltwasserzulauf anstelle des Rückschlagventils angeordnet. Wie zuvor bereits ausgeführt, entfällt dadurch die nachträgliche Anordnung eines T-Stückes innerhalb einer bestehenden Rohrleitung. An der Stelle des für den Brauchwasserspeicher vorgeschriebenen Rückschlagventils kann einfach der Strömungssensor eingesetzt werden, da dieser die Funktion des Rückschlagventils ebenfalls übernimmt.

Da bei einem Ein- oder Mehrfamilienhaus die Leitungswege zwischen dem in zumeist im Keller angeordneten Warmwasserspeicher und den einzelnen Zapfstellen relativ groß sind, weist die Wasserversorgungsanlage in der Regel eine Zirkulationspumpe und eine Zirkulationsleitung auf. Die Zirkulationsleitung sorgt dabei dafür, dass bei eingeschalteter Zirkulationspumpe permanent warmes Wasser an den Stichleitungen zu den einzelnen Zapfstellen ansteht.

Durch die Verwendung einer Zirkulationspumpe und einer Zirkulationsleitung wird der Komfort bei der Benutzung einer Warmwasserversorgungsanlage deutlich erhöht, da das gewünschte warme Wasser sehr kurzfristig nach dem Öffnen der Zapfstelle zur Verfügung steht. Dieser Vorteil wird jedoch durch den erhöhten Verbrauch an elektrischer Energie für die Zirkulationspumpe und insbesondere durch erhöhte Wärmeverluste in den Warmwasserleitungen erkauft. Um diese Verluste zu verringern, sind verschiedene Maßnahmen bekannt, eine "bedarfsorientierte" Steuerung der Zirkulationspumpe zu realisieren. Die einfachste und in der Praxis am häufigsten angewandte Maßnahme besteht in der Verwendung einer einfachen Zeitschaltuhr, wodurch erreicht wird, dass die Zirkulationspumpe zumindest während der Nacht ausgeschaltet bleibt. Durch die Verwendung des erfindungsgemäßen Strömungssensors kann darüber hinaus eine Steuerung der Zirkulationspumpe realisiert werden, bei der - durch das Schaltsignal des Strömungssensors initiiert - die Zirkulationspumpe nur bei einer Wasserentnahme, d. h. bei einer Strömung in einer Wasserleitung, eingeschaltet wird.

Die Erfindung soll anhand eines Ausführungsbeispiels und von Figuren erläutert werden. Hierbei zeigen:
- Fig. 1: einen Sensor bei beginnender Wasserentnahme;
- Fig. 2: einen Sensor bei voller Wasserentnahme;
- Fig. 3: eine prinzipielle Schnittdarstellung des Strömungssensors mit einem induktiven Näherungsschalter und
- Fig. 4: eine Ausführungsform mit einem einstückigen Gehäuse.

Der Strömungssensor 1 weist einen ein in das strömende Medium hineinragenden Hubkörper 6 auf, der beweglich an dem Gehäuse 2 geführt ist und in Abhängigkeit von der Strömung des zu überwachenden Mediums in Richtung des Gehäuses 2 gedrückt wird. Hierbei wird der Hubkörper 6 gegen die Federkraft eines zwischen dem Gehäuse 2 und dem Hubkörper 6 angeordneten Federelements 8 ausgelenkt.

Die Position des Hubkörpers 6, die ein Maß für die Strömung des zu überwachenden Mediums darstellt, wird von einem in dem Gehäuse 2 angeordneten berührungslosen Sensorelement ausgewertet. Im einfachsten Fall wird dabei nur das Vorhandensein oder Nicht-Vorhandensein einer bestimmten Strömung überwacht. Daneben ist es jedoch auch möglich, den Strömungssensor 1 so auszubilden, dass der tatsächliche Strömungswert gemessen und als Analog-oder Digitalwert ausgegeben wird.

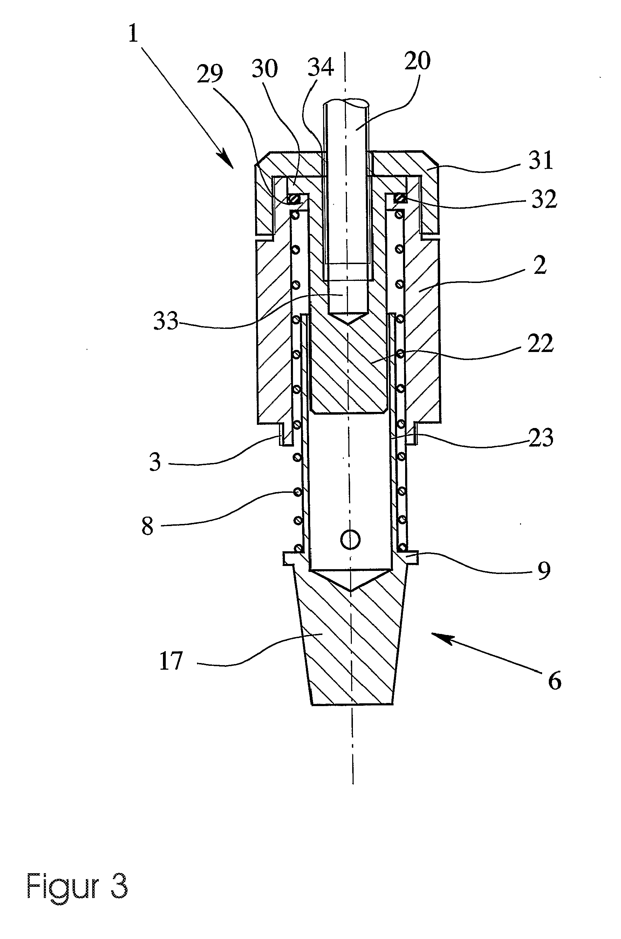

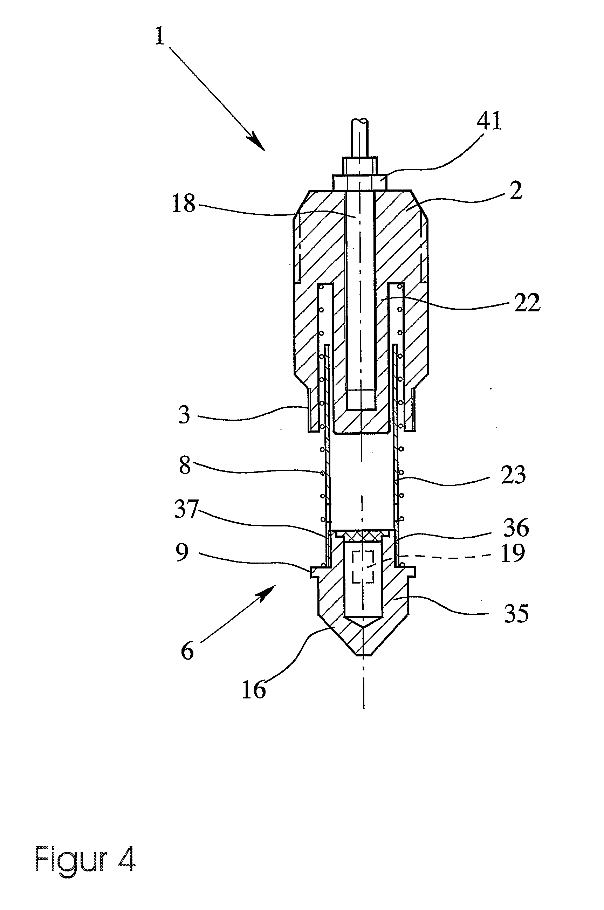

Beim Ausführungsbeispiel gemäß Fig. 3 und 4 ist am Hubkörper 6 ein umlaufender Bund 9 derart ausgebildet, dass der Strömungssensor 1 bei Einbau in einem entsprechenden, einen Ventilsitz aufweisenden Rohrstück, zusätzlich die Funktion eines Rückschlagventils aufweist. Zur Gewährleistung einer ausreichenden Dichtigkeit ist dabei vor dem Bund 9 noch ein Dichtungsring angeordnet.

Wie ersichtlich, weist das in das Innere des Rohres weisende Ende des Hubkörpers 6 eine konisch zulaufende Spitze oder eine kegelstumpfförmige Spitze 17 auf. Durch die Wahl der Spitze 17 kann dabei ebenfalls eine Einstellung des Hubes und damit auch des Schaltpunktes des Sensorelements erfolgen. Die Spitze des Hubkörpers 6 kann dabei auch - was hier nicht dargestellt ist - die Form eines schiefen Kegelstumpfes aufweisen, so dass der Konus nicht symmetrisch zur Mittelachse des Hubkörpers 6 ausgebildet ist. Dadurch kann erreicht werden, dass der Spalt proportional zum Hub wächst.

Bei der Ausführungsform des Strömungssensors 1 gemäß den Figuren ist als Sensorelement ein induktiver Näherungsschalter 20 vorgesehen, der in einer entsprechenden Bohrung in dem Gehäuse 2 befestigt ist.

Das zum Hubkörper 6 weisende Ende des Gehäuses 2 ist als Führungsbolzen 22 ausgebildet, auf dem der Hubkörper 6 geführt ist. Hierzu ist der Hubkörper 6 hülsenförmig ausgebildet.

Wie erläutert, ist bei der Ausführungsform des Strömungssensors 1 gemäß Fig. 3 als Sensorelement ein induktiver Näherungsschalter 20 vorgesehen, der ebenfalls in einer entsprechenden Bohrung im Gehäuse 2 befestigt ist. Dabei ist das zum Hubkörper 6 weisende Ende des Gehäuses 2 des Strömungssensors 1 als Führungsbolzen 22 ausgebildet, auf dem das dem Gehäuse 2 zugewandte hülsenförmige Ende 23 des Hubkörpers 6 geführt ist. Zur Gewährleistung der einwandfreien Funktion des induktiven Näherungsschalters 20 ist zumindest der Führungsbolzen 22 des Gehäuses 2 aus nicht metallischem Werkstoff ausgebildet, während der Hubkörper 6 aus metallischem Werkstoff besteht, so dass der Hubkörper 6 bei ausreichender Annäherung seines hülsenförmigen Endes 23 an den induktiven Näherungsschalter 20 einen Schaltvorgang auslöst. Der Schaltabstand, d. h. der Abstand des hülsenförmigen Endes 23 vom induktiven Näherungsschalter 20, bei dem dieser einen Schaltvorgang auslöst, beträgt beispielsweise 3 - 5 mm. Dabei bleibt der induktiven Näherungsschalter 20 solange bedämpft, wie er in das hülsenförmige Ende 23 des Hubkörpers 6 eintaucht. Dadurch ist auch bei einem relativ kleinen Schaltabstand ein großer Hub des Hubkörpers 6 von 20 mm oder mehr möglich, so dass bei einer entsprechend großen Strömung 7 der Hubkörper 6 so weit ausgelenkt werden kann, dass die Strömung 7 des Mediums nicht oder kaum beeinträchtigt wird.

Bei dem Strömungssensor 1 gemäß den Figuren sind das Gehäuse 2 und der Führungsbolzen 22 zwei separate Bauteile. Dabei weist das aus Metall, insbesondere aus Edelstahl, bestehende Gehäuse 2 eine umlaufende Schulter 29 und der aus Kunststoff bestehende Führungsbolzen 22 einen korrespondierenden Bund 30 auf. Die Befestigung des Führungsbolzens 22 in dem hülsenförmigen Gehäuse 2 erfolgt dabei mit Hilfe eines Deckels 31, der auf das Gehäuse 2 aufgeschraubt wird, wodurch der Bund 30 des Führungsbolzens 22 gegen die Schulter 29 des Gehäuses 2 gedrückt wird.

Zur Verhinderung einer mechanischen Beschädigung und zur sicheren Abdichtung ist zwischen der Schulter 29 des Gehäuses 2 und dem Bund 30 des Führungsbolzens 22 ein Dichtring 32 in einer entsprechend ausgebildeten Nut eingelegt. Der in einer Bohrung 33 im Führungsbolzen 22 angeordnete induktive Näherungsschalter 20 ist dadurch befestigt, dass im Deckel 31 eine Bohrung mit einem Innengewinde 34 ausgebildet ist, in die der induktive Näherungsschalter 20 eingeschraubt wird. Die in Fig. 11 dargestellte besondere Ausgestaltung des Strömungssensors 1, mit dem Gehäuse 2, dem separaten Führungsbolzen 22 und dem Deckel 31 ist auch bei sehr hohen Drücken bis zu mehreren 100 bar einsetzbar.

Der in der Fig. 4 dargestellte Hubkörper 6 ist zweiteilig aufgebaut, besteht nämlich aus dem hülsenförmigen Ende 23 (Rohr) und dem massiven Ende 35. Das Ende 35 weist dabei ein Außengewinde 36 und das hülsenförmige Ende 23 ein korrespondierendes Innengewinde 37 auf, so dass die beiden Teile des Hubkörpers 6 einfach miteinander verschraubt werden können. Dadurch ist eine große Variationsmöglichkeit gegeben, da ein und dasselbe hülsenförmigen Ende 23 mit unterschiedlich ausgebildeten massiven Enden 35 - mit konisch zulaufender Spitze 16 oder mit kegelstumpfförmiger Spitze 17 sowie mit oder ohne zylindrischem Abschnitt 12 - kombiniert werden kann.

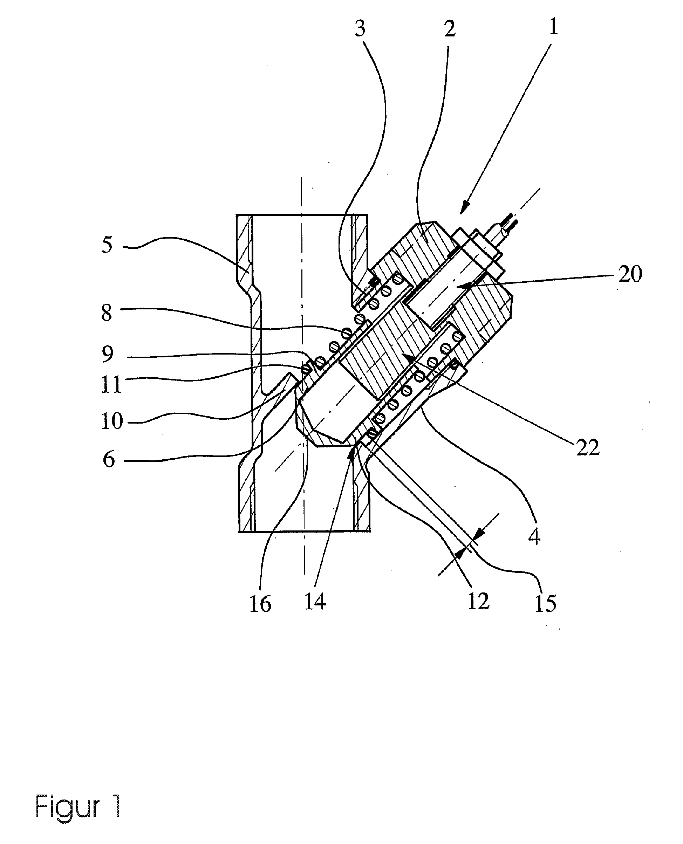

Ist keine Strömung vorhanden, so wird der Hubkörper 6 aufgrund der Federkraft des Federelements 8 gegen den Ventilsitz 10 gedrückt, wobei der ringförmige Spalt 14 durch den Dichtungsring 11 verschlossen ist. Beim Anstehen einer geringen Strömung, wie dies in der Fig. 1 dargestellt ist, wird der Hubkörper 6 durch die Strömung entgegen der Federkraft des Federelements 8 zum Gehäuse 2 gedrückt. Das strömende Medium kann dann durch den Spalt 14 in der vorgegebenen Richtung durch das Rohr 5 strömen. Hierbei wird durch die Ausbildung des in den Ventilsitz 10 hineinragenden zylindrischen Abschnitts 12 erreicht, dass auch bei einer relativ geringen Strömung der dadurch verursachte Hub 15 des Hubkörpers 6 ausreichend groß ist, so dass er von dem in dem Strömungssensor 1 angeordneten Sensorelement detektiert werden kann. Durch eine entsprechende Wahl der Länge des zylindrischen Abschnitts 12, des Spaltes 14 sowie eine entsprechende Dimensionierung des Federelements 8 kann dabei der bei einer bestimmten Strömung 7 auftretende Hub 15 eingestellt werden. Durch eine entsprechende Einstellung des Hubes 15 bei einer bestimmten Strömung 7 ist somit eine Anpassung an die Eigenschaften des verwendeten Näherungsschalters, insbesondere an den Schaltpunkt des Näherungsschalters, möglich.

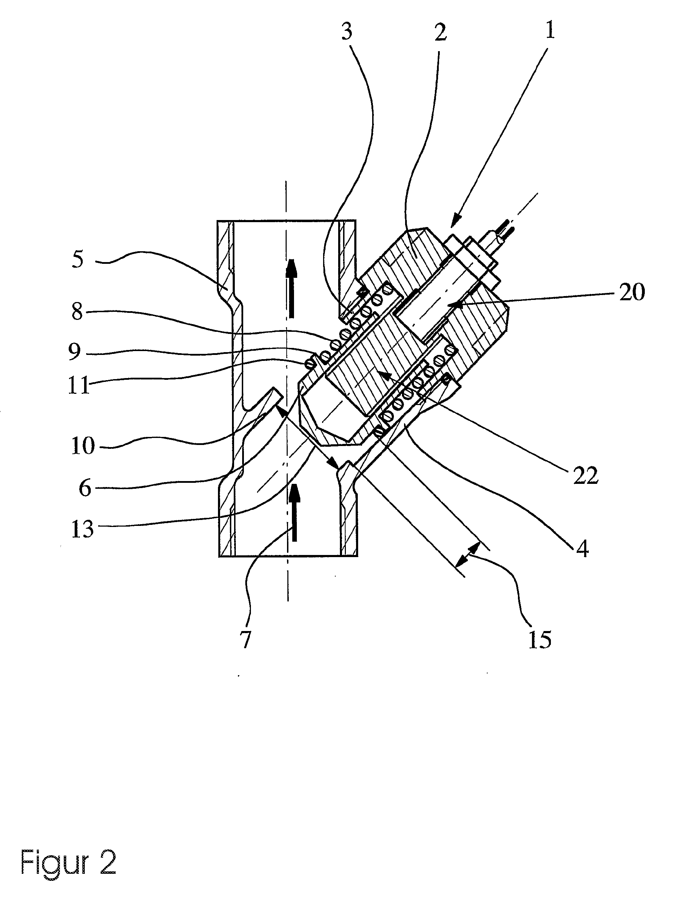

Wie der Fig. 2 entnommen werden kann, ist der Hubkörper 6 so dimensioniert, dass bei maximaler Strömung 7 die Öffnung 13 nahezu vollständig freigegeben ist, so dass der Durchfluss des strömenden Mediums nahezu ungehindert erfolgen kann. Darüber hinaus kann der Fig. 2 entnommen werden, dass beim Auftreten einer Strömung entgegen der in der Fig. 2 eingezeichneten Richtung der Strömungssensor 1 als Rückschlagventil fungiert. Durch die Federkraft des Federelements 8 wird der Hubkörper 6 mit seinem Bund 9 bzw. dem Dichtungsring 11 gegen den Ventilsitz 10 gedrückt, so dass kein Medium in entgegengesetzter Richtung - bei der Darstellung gemäß den Figuren von oben - durch das Rohr 5 fließen kann.

## Patentansprüche

1. Sensor für strömende Medien mit einem Gehäuse, einem Sensorelement und einem Hubkörper,
**dadurch gekennzeichnet, dass**
das zum Hubkörper weisende Ende des Gehäuses als Führungsbolzen und ein Ende des Hubkörpers ring- oder hülsenförmig ausgebildet ist, wobei der Hubkörper durch den Bolzen geführt wird,
weiterhin der hülsenförmige Teil des Hubkörpers als Betätigungselement für einen induktiven Näherungsschalter als Sensorelement dient,
der induktive Näherungsschalter im zum Hubkörper weisenden Ende des Gehäuses befestigt ist und der Hubkörper den induktiven Näherungsschalter bedämpft.

2. Sensor nach Anspruch 1,
**dadurch gekennzeichnet, dass**
die Bedämpfung des induktiven Näherungsschalters proportional zur Eintauchtiefe in den ring- oder hülsenförmigen Teil des Hubkörpers ist.

3. Sensor nach Anspruch 2,
**dadurch gekennzeichnet, dass**
mindestens der Führungsbolzen des Gehäuses aus einem nichtmetallischen Werkstoff besteht.

4. Sensor nach einem der vorangegangenen Ansprüche,
**dadurch gekennzeichnet, dass**
der hülsenförmige Teil des Hubkörpers aus einem metallischen Werkstoff besteht.

5. Sensor nach einem der Ansprüche 1 bis 3,
**dadurch gekennzeichnet, dass**
der hülsenförmige Teil des Hubkörpers aus Kunststoff mit mindestens einem Metallring besteht.

6. Sensor nach Anspruch 5,
**dadurch gekennzeichnet, dass**
mehrere, einen Abstand zueinander aufweisende Metallringe im hülsenförmigen Teil des Hubkörpers angeordnet sind.

7. Sensor nach einem der vorangegangenen Ansprüche,
**dadurch gekennzeichnet, dass**
das Gehäuse und der Führungsbolzen als separate Bauteile ausgeführt sind.

8. Sensor nach einem der vorangegangenen Ansprüche,
**dadurch gekennzeichnet, dass**
der induktive Näherungsschalter in einer Bohrung im Gehäuse befestigt ist.

9. Sensor nach einem der vorangegangenen Ansprüche,
**dadurch gekennzeichnet, dass**
der induktive Näherungsschalter nicht bündig im Führungsbolzen angeordnet ist.

10. Sensor nach einem der vorangegangenen Ansprüche,
**dadurch gekennzeichnet, dass**
der hülsenförmige Teil des Hubkörpers dünnwandig ausgebildet ist.

11. Sensor nach Anspruch 10,
**dadurch gekennzeichnet, dass**
die Wandstärke des hülsenförmigen Teils des Hubkörpers≤ 1 mm ist.

12. Sensor nach einem der vorangegangenen Ansprüche,
**dadurch gekennzeichnet, dass**
der Hubkörper zweiteilig ausgebildet ist.

13. Sensor nach Anspruch 12,
**dadurch gekennzeichnet, dass**
beide Teile des Hubkörpers aus verschiedenen Materialien bestehen.

14. Sensor nach einem der vorangegangenen Ansprüche,
**dadurch gekennzeichnet, dass**
der induktive Näherungsschalter derart im Gehäuse angeordnet ist, dass der Abstand zum Hubkörper und damit der Schaltpunkt oder der Messbereich einstellbar ist.

15. Sensor nach einem der vorangegangenen Ansprüche,
**dadurch gekennzeichnet, dass**
das Verhältnis des Durchmessers des hülsenförmigen Teils des Hubkörpers zum Durchmesser einer im induktiven Näherungsschalter befindlichen Spule einen Wert von 2 bis 4, vorzugsweise 2,5 bis 3,5 aufweist.
